# EUROPEAN PATENT SPECIFICATION

(11) **EP 3 896 350 B1**
(45) Date of publication and mention of the grant of the patent: **15.10.2025**
(21) Application number: 19896943.8
(22) Date of filing: 12.11.2019
(51) Int. Cl.: F24F 11/43, F24F 11/65, F24F 11/61, F24F 11/77

(54) **MULTI-SPLIT AIR CONDITIONER AND CONTROL METHOD THEREFOR**
MULTISPLIT-KLIMAANLAGE UND STEUERUNGSEINHEIT DAFÜR
CLIMATISEUR À DIVISIONS MULTIPLES ET PROCÉDÉ DE COMMANDE ASSOCIÉ

(30) Priority: 14.12.2018 CN 201811531030
(43) Date of publication of application: 20.10.2021
(73) Proprietor: QINGDAO HISENSE HITACHI AIR-CONDITIONING SYSTEMS CO., LTD., Economic and Technical Development Zone Qingdao, Shandong 266555 (CN)
(72) Inventor: GAO, Ling, Qingdao, Shandong 266555 (CN); GU, Xiaoyu, Qingdao, Shandong 266555 (CN); LIU, Kun, Qingdao, Shandong 266555 (CN)
(74) Representative: Casalonga
(86) International application number: PCT/CN2019/117277
(87) International publication number: WO 2020/119364

(56) References cited:
- EP-A1- 3 343 118
- WO-A1-2018/198397
- CN-A- 101 256 061
- CN-A- 103 591 732
- CN-A- 103 591 732
- CN-A- 104 896 621
- CN-A- 106 545 975
- CN-A- 106 679 111
- CN-A- 108 361 931
- CN-A- 109 855 191
- JP-A- 2018 189 356
- JP-A- H0 942 738
- JP-B1- 6 387 200
- KR-B1- 101 844 860
- US-A- 4 627 483

## Description

This application claims priority to Chinese Patent Application No.201811531030.X, filed with the Chinese Patent Office on December 14, 2018, titled "MULTI-SPLIT AIR CONDITIONER AND CONTROL METHOD THEREFOR".

### TECHNICAL FIELD

The present invention relates to the field of air conditioners, and in particular, to a field of self-cleaning control of an indoor unit of a multi-split air conditioner.

### BACKGROUND

At present, with the improvement of people's living standard, multi-split air conditioners have been very popular in the household market. Most of indoor units of the multi-split conditioners are embedded indoor units, but heat exchangers of the embedded indoor units cannot be cleaned manually after long-time use and thus a self-cleaning technique is needed to meet the demands of the users. For a unitary air conditioner, since there is only one indoor unit, the self-cleaning process may not be affected by control of other indoor unit(s), and the sensor information involved is relatively less. But for a multi-split air conditioner, the self-cleaning process may be interfered by control of other indoor unit(s), the sensor information involved is relatively more, and a performance of the entire machine may also be affected. Therefore, a self-cleaning control algorithm for the indoor units of the multi-split machine is a main technical problem to be overcome.

D1 (KR101844860B1) discloses an air conditioner and a control method thereof, so as to obtain the reliability of cooling and heating operations by preventing multiple cycles from starting a defrost operation at the same time because the number of cycles doing the defrost operation is constantly controlled. The air conditioner comprises air handling units (101-103) and a central controller (1). The air handling units comprise cycle controllers (111-119) by which independently operating cycles are individually controlled. The air handling units are connected to the cycle controllers and comprise main controllers (11-13) for monitoring and controlling the cycles. The central controller is connected to the main controllers. The central controller monitors and controls data on the cycles and sets the number of the cycles to be defrosted at the same time.

D2 (WO02018198397A1) discloses an air conditioner in which the cleaning of an indoor heat exchanger can be canceled. This air conditioner (100) is provided with: a refrigerant circuit (Q) through which a refrigerant circulates during a refrigeration cycle, wherein the refrigerant flows through components in the following order: a compressor (31), a condenser, an outdoor expansion valve (34), and an evaporator; and a control means which controls at least the compressor (31) and the outdoor expansion valve (34). One among the condenser and the evaporator is an outdoor heat exchanger (32), and the other is an indoor heat exchanger (12). On the basis of a signal from a remote controller or a mobile terminal, the control means cancels a cooling operation after freezing or condensation occurs in the indoor heat exchanger (12), or after a heating operation is performed.

D3 (JP6387200B1) discloses an air conditioner which enables efficient cleaning of a cleaning member. The air conditioner includes: a heat exchanger (an indoor heat exchanger 15); a fan cleaning part 24 which cleans a blower fan (an indoor fan 16); and a control part 30 which selectively causes the fan cleaning part to contact with the heat exchanger and the blower fan. The control part causes a refrigeration cycle to generate dew condensation water with the heat exchanger before causing the fan cleaning part to contact with the heat exchanger or while causing the fan cleaning part to contact with the heat exchanger.

### SUMMARY

In order to solve the above problem, the present application provides a multi-split air conditioner and a control method therefor. In the indoor units of the present application, any indoor unit may perform a self-cleaning mode, or more indoor units may perform the self-cleaning mode simultaneously. The control method guarantees that there is no operation conflict between the indoor unit(s) performing the self-cleaning mode and the other indoor unit(s), thereby making the operation of the multi-split air conditioner stable.

In one aspect, the present disclosure provides a multi-split air conditioner, which is defined in independent claim 1.

In another aspect, the present disclosure provides a control method for a multi-split air conditioner based on the multi-split air conditioner, which is defined in independent claim 9.

Further advantageous embodiments of the present disclosure are indicated in the dependent claims.

It is to be understood that both the forgoing general description and the following detailed description are exemplary only, and are not restrictive of the present disclosure.

### BRIEF DESCRIPTION OF THE DRAWINGS

In order to describe technical solutions in embodiments of the present application or the prior art more clearly, the accompanying drawings that need to be used in the description of the embodiments or the prior art will be introduced briefly. Obviously, the accompanying drawings to be described below are merely some embodiments of the present application, and a person of ordinary skill in the art may obtain other drawings according to these drawings without paying any creative effort.
FIG. 1 is a schematic diagram of steps performed by a controller of a multi-split air conditioner in an embodiment of the present application;
FIG. 2 is a schematic diagram of a water condensation mode in an embodiment of the present application;
FIG. 3 is a schematic diagram of an icing mode in an embodiment of the present application; and
FIG. 4 is a schematic diagram of an ice melting mode in an embodiment of the present application.

### DETAILED DESCRIPTION

The Chinese invention patent CN107655170A discloses a self-cleaning method for a heat exchanger of an air conditioner and an air conditioner. The invention discloses the self-cleaning method for the heat exchanger of the air conditioner and the air conditioner. The air conditioner includes the heat exchanger and an electric heater, and the electric heater is disposed correspondingly to the heat exchanger. The self-cleaning method for the heat exchanger of the air conditioner includes the following steps: obtaining a control instruction for self-cleaning control, and entering a self-cleaning mode; adjusting the fan speed of the air conditioner and/or reducing the temperature of the indoor heat exchanger to make the heat exchanger frosted; and when the heat exchanger has already frosted, turning on the electric heater, and adjusting an opening degree of an air deflector of the air conditioner, so as to defrost the heat exchanger.

The above prior patent realizes the self-cleaning function by making the heat exchanger ice up and then melting the ice, but when the self-cleaning instruction is executed, information of the operation mode and alarm of the indoor unit are not excluded, which may cause an operation conflict between the indoor unit in the self-cleaning mode and the other indoor unit(s).

The present application is specifically described below through exemplary embodiments. However, it will be understood that elements, structures and features in an embodiment may also be beneficially incorporated in other embodiments without further description.

In the description of the present application, it will be understood that orientations or positional relationships indicated by terms "center", "upper", "lower", "front", "rear", "left", "right", "vertical", "horizontal", "top", "bottom", "inner", "outer", etc. are based on orientations or positional relationships shown in the drawings, which merely to facilitate the description of the present application and simplify the description, rather than indicate or imply that the referred devices or elements must have a particular orientation, or must be constructed or operated in a particular orientation. Therefore, these terms should not be construed as limitations to the present application.

Terms such as "first", "second" and "third" are only used for descriptive purposes and are not to be construed as indicating or implying the relative importance or implicitly indicating the number of indicated technical features. Thus, features defined by "first", "second" and "third" may explicitly or implicitly include one or more of the features.

In the description of the present application, it will be noted that unless expressly specified and limited otherwise, the term "mounted", "communicated" or "connected" should be understood broadly, for example, it may be a fixed connection, a detachable connection, or an one-piece connection; and it may be a direct connection, or may be an indirect connection through an intermediate medium, and may be internal communication between two elements. Specific meanings of the above terms in the present application may be understood by those skilled in the art according to specific situations.

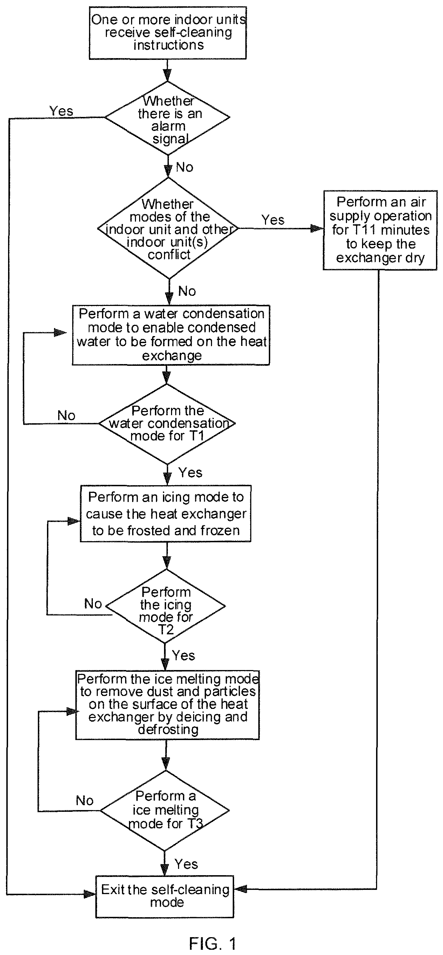

As shown in FIG. 1, the present application provides a multi-split air conditioner which includes a plurality of indoor units with heat exchangers, and each indoor unit includes a motor, a water pump, etc. The indoor unit has a same structure as an existing indoor unit, and a difference between the two mainly lies in controllers of the indoor units. With particular reference to FIG. 1, the illustration is as follows.

Each indoor unit includes a controller which includes a processor and a memory, and a computer program is stored in the memory. When the computer program is executed on the processor, the following steps are able to be implemented in such way that:
when an indoor unit receives a self-cleaning instruction, detecting whether an alarm exists in a multi-split system, and if it is detected that there is an alarm signal, stopping executing the self-cleaning instruction; and
detecting whether the operation mode(s) of the other indoor unit(s) conflict with the operation mode of the indoor unit receiving the self-cleaning instruction, and if modes conflict, the indoor unit receiving the self-cleaning instruction performs a self-cleaning waiting mode, and the other indoor unit(s) continuing to operate according to set operation mode(s).

That the modes conflict means that, for example, when an indoor unit required to perform the self-cleaning mode is performing a refrigeration mode, while any other indoor unit is performing a heating mode, and the "refrigeration mode" and the "heating mode" are both operation modes set for the indoor units by different users.

By prioritizing whether there is the alarm signal in the system and whether the operation mode(s) of the other indoor unit(s) in the system conflict with the operation mode of the indoor unit receiving the self-cleaning instruction before the indoor unit receiving the self-cleaning instruction performs the self-cleaning mode, the multi-split air conditioner may reduce operation conflict(s) between the indoor unit performing the self-cleaning mode and the other indoor unit(s), and adverse effects on the performance of the entire air conditioner are reduced as much as possible.

As shown in FIGS. 1 to 4, in the above description, the controller is configured to implement the following steps: when no alarm or mode conflict is detected, the following modes are sequentially performed:
a water condensation mode which enables condensed water to be formed on a surface of a heat exchanger, an icing mode which enables frost and ice to be formed on the heat exchanger, and an ice melting mode which removes dust on the surface of the heat exchanger by deicing and defrosting.

Through the above three modes, i.e., the water condensation mode, the icing mode and the ice melting mode, the heat exchanger can sequentially fully absorb moisture in the air to form condensed water on its surface; and particles on the heat exchanger are separated from fins by utilizing surface tension changes of an evaporator.

After the ice melting period, dust particles on the surface of the heat exchanger are removed.

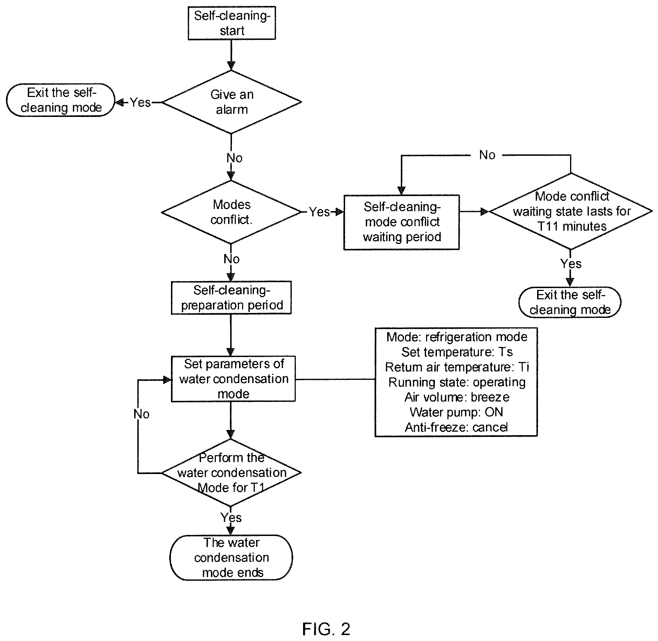

Specifically, as shown in FIG. 2, in the above multi-split air conditioner, when the controller performs the water condensation mode, the following steps are able to be implemented:
setting condensed water formation parameters, i.e., setting the indoor unit performing self-cleaning to be in the refrigeration mode, setting a temperature as a preset temperature, setting an air volume that is able to formed a breeze when the motor rotates at a preset first rotational speed, turning on the water pump and stopping an anti-freezing mode; and
waiting for a first preset time after the condensed water formation parameters are set, so that the condensed water is formed on the surface of the heat exchanger.

The specific parameters in FIG. 2 are taken as an example for illustration. In the water condensation mode, the indoor unit is controlled to be in the refrigeration mode, the air volume is controlled to be the breeze, that is, when the motor rotates at the preset first rotational speed, a return air temperature of the indoor unit is Ti, the temperature is set as Ts, and the indoor unit is forced to operate for a first preset time, T1 minutes, which makes full use of a high start control frequency of a compressor of an outdoor unit, so that the condensed water is rapidly formed on the heat exchanger.

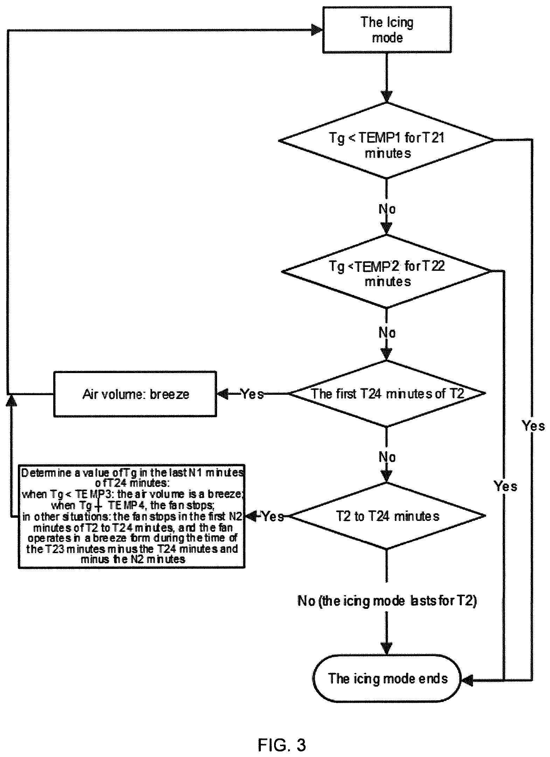

As shown in FIG. 3, when the controller performs the icing mode, the following steps is able to be implemented: determining whether an air pipe temperature of the indoor unit heat exchanger is always less than a first preset temperature during a second preset time; if so, ending the icing mode, otherwise, performing a next step;
controlling the motor to rotate at the preset first rotational speed during a third preset time to form the breeze, obtaining an air pipe temperature of the heat exchanger of the indoor unit during a latter part of the third preset time, and determining magnitude relations between the air pipe temperature, a second preset temperature and a third preset temperature, with the second preset temperature being less than the third preset temperature; if the air pipe temperature of the heat exchanger of the indoor unit is less than the second preset temperature, the motor is controlled to rotate in a breeze mode at the preset first rotational speed during a fourth preset time, and if the air pipe temperature of the heat exchanger of the indoor unit is not less than the third preset temperature, the motor is controlled to stop rotating during the fourth preset time; and
if the air pipe temperature of the heat exchanger of the indoor unit is between the second preset temperature and the third preset temperature, the motor is controlled to stop rotating during a former part of the fourth preset time, and the motor is controlled to run at the first rotational speed during the remaining time of the fourth preset time.

Specifically, in the icing mode, FIG. 3 is taken as an example for illustration, and in a case where there is no alarm and no mode conflict, the indoor unit can normally enter a self-cleaning icing period.

The indoor unit is controlled to be in the refrigeration mode, the return air temperature of the indoor unit is Ti, the temperature of the indoor unit is set as Ts, and the indoor unit is forced to operate, which makes full use of the high start control frequency of the compressor of the outdoor unit, so that ice is rapidly formed on the heat exchanger.

When Tg meets a condition of early exit from the icing period, situations are as follows:
when Tg is less than TEMP1, the icing period lasts for T21 minutes and then ends; and
when Tg is less than TEMP2, the icing period lasts for T22 minutes and then ends.

In the above description, Tg is the air pipe temperature of the heat exchanger of the indoor unit; TEMP1 and TEMP2 are two different temperatures selected from the first preset temperature, T21 and T22 are respectively two periods of time selected from the second preset time corresponding to TEMP1 and TEMP2, where TEMP1 is greater than TEMP2, and T21 is less than T22.

When Tg does not meet the condition of early exit from the icing period, the self-cleaning icing period lasts for T2 minutes and then ends. During the whole period of T2, the air volume control is different, and situations are as follows:
during the first T24 minutes of the T2 minutes, the air volume is the breeze; and
during the time of the T2 minutes minus the T24 minutes, a value of Tg in the last N1 minutes of the first T24 minutes needs to be determined to control the air volume.

When Tg is less than TEMP3, the air volume is the breeze during the time of the T2 minutes minus the T24 minutes;
when Tg is greater than or equal to TEMP4, the fan stops running during the time of the T2 minutes minus the T24 minutes; and
in other situations, the fan stops running during the time of the T2 minutes minus a first N2 minutes of the T2 minutes, the fan runs in the breeze mode during the time of the T2 minutes minus the T24 minutes and minus N2 minutes.

In the above description, a total icing time is the T2 minutes, the T24 minutes are the third preset time, the time of the T2 minutes minus the T24 minutes is the fourth preset time, the last N1 minutes are the latter part of the third preset time, the first N2 minutes are the former part of the fourth preset time, and TEMP 3 and TEMP 4 are the second preset temperature and the third preset temperature, respectively.

In order to set the above procedures more clearly, following contents are illustrated through examples.

During the icing period, when Tg meets the certain condition, the icing period ends in advance.

Timekeeping is started when the icing period starts. In the whole icing process, the icing period lasts for 5 minutes and then ends when Tg is less than -10 °C, and the icing period lasts for 7 minutes and then ends when Tg is less than -5 °C (TEMP2).

However, when Tg does not meet the above conditions, the icing period lasts for 10 minutes and then ends. In the first 5 minutes of 10 minutes, the fan runs in the breeze mode.

In the last 5 minutes, the fan is controlled according to the value of Tg, which is a continually obtained value during the last 2 minutes of the first 5 minutes. The value of Tg is compared with the preset values, and there are three situations as follows.
a. When Tg is less than -3 °C (TEMP3), the fan runs in the breeze mode in the last 5 minutes;
b. when Tg is greater than 1 °C (TEMP4), the fan is stopped during the last 5 minutes; and
c. when Tg does not meet the above two conditions, the fan is stopped during the first 4 minutes (N2) of the last 5 minutes (the time of T2 minus T24), and the fan runs in the breeze mode in the last 1 minute (the time of the T2 minutes minus the T24 minutes and minus the N2 minutes).

Through the above description, the icing time of the self-cleaning icing period may be automatically adjusted according to information on an air pipe temperature sensor for the heat exchanger, an amount of ice formed on the heat exchanger is guaranteed, and the dust on the heat exchanger is fully removed.

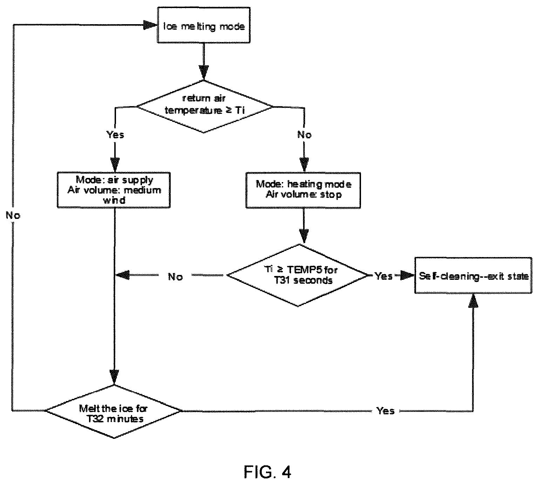

As shown in FIG. 4, when the controller performs the ice melting mode, the following steps are able to be implemented: determining whether the air return temperature of the indoor unit is greater than a preset air return temperature, if so, controlling the motor to rotate at a preset second rotational speed to form an air supply of medium wind; and
if not, a heating mode is performed, and controlling the motor to stop rotating, so as to produce heat to melt the ice.

When the controller performs the ice melting mode, the following steps are able to be implement: when the indoor unit performs the ice melting mode with the air supply of medium wind, the indoor unit continuously performs the ice melting mode for a fifth preset time, and then ends the ice melting mode.

When the indoor unit performs the ice melting mode with heat, the following steps are implemented. First, it is determined that whether a temperature on a liquid pipe temperature sensor during a sixth preset time is greater than a fifth preset temperature, if so, the ice melting mode is exited, otherwise, it is continued to perform the ice melting mode with heat in a seventh preset time.

The preset second rotational speed is greater than the preset first rotational speed.

FIG. 4 is taken as an example for specific illustration, and in a case where there is no alarm and no mode conflict, the indoor unit can normally enter the self-cleaning ice melting period.

A mode of the ice melting period of the indoor unit needs to be switched according to the return air temperature, and situations are as follows.

When the return air temperature of the indoor unit is greater than or equal to a preset return air temperature Ti, air is supplied to melt the ice.

When the return air temperature of the indoor unit is less than Ti, heat is produced to melt the ice.

A ice melting duration varies according to different modes during the ice melting period, and situations are as follows: when the air is supplied to melt the ice, the ice melting duration is T32 minutes; when heat is produced to melt the ice, the ice melting duration needs to be determined according to information on the liquid pipe temperature sensor, and situations are as follows.

When Ti is greater than or equal to TEMP5, the ice melting state lasts for T31 seconds, then ends; and otherwise, the ice melting state lasts for T32 minutes, then ends.

The ice melting mode is automatically altered according to information of a return air temperature sensor in the ice melting period, which may be conducive to melting the ice quickly. Accordingly, the heat exchanger may be effectively cleaned, and energy consumption is effectively reduced.

When the controller performs the self-cleaning waiting mode, the following steps are able to be implemented: the motor is controlled to rotate at the preset first rotational speed to supply air during a preset waiting time.

As shown in FIG. 1, the preset waiting time is T11 minutes.

An embodiment of the present application further provides a control method for the multi-split air conditioner, and the control method is based on the multi-split air conditioner described in any of the above embodiments. When the multi-split air conditioner operates, any one or more indoor units performs the self-cleaning mode, it is detected that whether there is an alarm signal in the multi-split air conditioner, and if there is, the self-cleaning mode is exited.

It is detected that whether there is a running conflict between other indoor unit(s) and the indoor unit(s) performing the self-cleaning mode, if there is, the indoor unit(s) are operated to supply air during the preset waiting time to keep surface(s) of heat exchanger(s) dry, and preferentially perform set operation mode(s) of the indoor unit(s).

## Claims

1. A multi-split air conditioner, comprising a plurality of indoor units with heat exchangers, wherein
each indoor unit comprises a controller, the controller comprises a processor and a memory, **characterized in that**,
the controller is configured to be able to implement following steps:
when an indoor unit receives a self-cleaning instruction, detecting whether an operation mode of any other indoor unit conflicts with an operation mode of the indoor unit receiving the self-cleaning instruction; and
if modes conflict, performing a self-cleaning waiting mode, by the indoor unit receiving the self-cleaning instruction, and continuing to operate according to a set operation mode, by the any other indoor unit.

2. The multi-split air conditioner according to claim 1, **characterized in that** when the indoor unit receives the self-cleaning instruction, it is detected that whether there is an alarm in a multi-split system; and if there is the alarm, the self-cleaning instruction is not executed.

3. The multi-split air conditioner according to claim 2, **characterized in that** the controller is configured to be able to implement following steps: when no alarm or mode conflict is detected, performing following modes sequentially: a water condensation mode that enables condensed water to be formed on a surface of a heat exchanger, an icing mode that enables frost and ice to be formed on the heat exchanger, and an ice melting mode that removes dust on the surface of the heat exchanger by deicing and defrosting.

4. The multi-split air conditioner according to claim 3, **characterized in that** when the controller performs the water condensation mode, the controller is able to implement following steps: setting condensed water formation parameters comprising: setting the indoor unit receiving the self-cleaning instruction to be in a refrigeration mode, setting a temperature as a preset temperature, setting an air volume that is able to form a breeze when a motor of the indoor unit receiving the self-cleaning instruction rotates at a preset first rotational speed, turning on a water pump of the indoor unit receiving the self-cleaning instruction and stopping an anti-freezing mode; and waiting continuously for a first preset time after the condensed water formation parameters are set, so that the condensed water is formed on the surface of the heat exchanger.

5. The multi-split air conditioner according to any one of claims 2 to 4, **characterized in that** when the controller performs an icing mode, the controller is able to implement following steps: determining whether an air pipe temperature of a heat exchanger of the indoor unit is always less than a first preset temperature during a second preset time, if so, ending the icing mode; otherwise, performing a next step comprising: controlling a motor of the indoor unit receiving the self-cleaning instruction to rotate at a preset first rotational speed during a third preset time to form a breeze, obtaining an air pipe temperature of the heat exchanger of the indoor unit during a latter part of the third preset time, and determining magnitudes between the air pipe temperature, a second preset temperature and a third preset temperature, wherein the second preset temperature is less than the third preset temperature; if the air pipe temperature of the heat exchanger of the indoor unit is less than the second preset temperature, controlling the motor to rotate in a breeze mode at the preset first rotational speed during a fourth preset time, and if the air pipe temperature of the heat exchanger of the indoor unit is not less than the third preset temperature, controlling the motor to stop rotating during the fourth preset time; and if the air pipe temperature of the heat exchanger of the indoor unit is between the second preset temperature and the third preset temperature, controlling the motor to stop rotating during a former part of the fourth preset time, and controlling the motor to rotate at the preset first rotational speed during remaining time of the fourth preset time.

6. The multi-split air conditioner according to claim 5, **characterized in that** when the controller performs an ice melting mode, the controller is able to implement following steps: determining whether a return air temperature of the indoor unit is greater than a preset return air temperature, if so, controlling the motor to rotate at a preset second rotational speed to form an air supply of medium wind; and if not, performing a heating mode and controlling the motor to stop rotating, so as to form heat to melt ice.

7. The multi-split air conditioner according to claim 6, **characterized in that** when the controller performs the ice melting mode, the controller is able to implement: when the indoor unit performs the ice melting mode with the air supply of medium wind, performing the ice melting mode continuously for a fifth preset time and then ending the ice melting mode; when the indoor unit performs the ice melting mode with the heat, first, determining whether a temperature on a liquid pipe temperature sensor of the indoor unit performs the ice melting mode during a sixth preset time is greater than a fifth preset temperature, if so, ending the ice melting mode, otherwise, continuing to perform the ice melting mode with the heat in a seventh preset time.

8. The multi-split air conditioner according to claim 1, **characterized in that** when the controller performs the self-cleaning waiting mode, the controller is able to implement a following step: controlling a motor of the indoor unit receiving the self-cleaning instruction to rotate at a preset first rotational speed to supply air during a preset waiting time.

9. A control method for a multi-split air conditioner based on the multi-split air conditioner according to any one of claims 1 to 8, **characterized in that** when at least one indoor unit in the plurality of indoor units performs a self-cleaning mode, it is detected that whether there is an operation conflict between any other indoor unit and the at least one indoor unit performing the self-cleaning mode, if there is the operation conflict, the at least one indoor unit operates to supply air during a preset waiting time to keep a surface of at least one heat exchanger dry of the at least one indoor unit, and preferentially performs a set operation mode of the at least one indoor unit.

## Patentansprüche

1. Multisplit-Klimaanlage, aufweisend mehrere Inneneinheiten mit Wärmeaustauschern, wobei
jede Inneneinheit eine Steuerung aufweist, wobei die Steuerung einen Prozessor und einen Speicher aufweist, **dadurch gekennzeichnet, dass**
die Steuerung so eingerichtet ist, dass sie in der Lage ist, die folgenden Schritte auszuführen:
bei Erhalt eines Selbstreinigungsbefehls durch eine Inneneinheit, Detektieren, ob ein Betriebsmodus irgendeiner anderen Inneneinheit mit einem Betriebsmodus der Inneneinheit, die den Selbstreinigungsbefehl erhalten hat, in Konflikt steht; und
wenn Moden in Konflikt stehen, Durchführen eines Selbstreinigungswartemodus durch die Inneneinheit, die den Selbstreinigungsbefehl erhalten hat, und Fortsetzen des Betriebs gemäß einem festgelegten Betriebsmodus durch irgendeine andere Inneneinheit.

2. Multisplit-Klimaanlage nach Anspruch 1, **dadurch gekennzeichnet, dass** bei Erhalt des Selbstreinigungsbefehls durch die Inneneinheit detektiert wird, ob in einem Multisplit-System ein Alarm vorliegt, und der Selbstreinigungsbefehl bei Vorliegen des Alarms nicht ausgeführt wird.

3. Multisplit-Klimaanlage nach Anspruch 2, **dadurch gekennzeichnet, dass** die Steuerung so eingerichtet ist, dass sie in der Lage ist, die folgenden Schritte auszuführen: wenn kein Alarm oder Moduskonflikt detektiert wird, sequentielles Durchführen der folgenden Moden: eines Wasserkondensationsmodus, der ermöglicht, dass an einer Oberfläche eines Wärmeaustauschers Kondenswasser gebildet wird, eines Vereisungsmodus, der ermöglicht, dass auf dem Wärmeaustauscher Reif und Eis gebildet werden, und eines Abtaumodus, der Staub auf der Oberfläche des Wärmeaustauschers durch Enteisen und Auftauen beseitigt.

4. Multisplit-Klimaanlage nach Anspruch 3, **dadurch gekennzeichnet, dass** die Steuerung bei der Durchführung des Wasserkondensationsmodus durch die Steuerung in der Lage ist, die folgenden Schritte auszuführen: Einrichten von Kondenswasserbildungsparametern, das ein Versetzen der Inneneinheit, die den Selbstreinigungsbefehl erhalten hat, in einen Kühlmodus, ein Einrichten einer Temperatur als eine vorgegebene Temperatur, ein Einrichten einer Luftmenge, die eine Brise erzeugen kann, wenn sich ein Motor der Inneneinheit, die den Selbstreinigungsbefehl erhalten hat, mit einer vorgegebenen ersten Umdrehungsgeschwindigkeit dreht, ein Einschalten einer Wasserpumpe der Inneneinheit, die den Selbstreinigungsbefehl erhalten hat, und ein Anhalten eines Frostschutzmodus umfasst; und fortlaufendes Warten für eine vorgegebene erste Zeit nach dem Einrichten der Kondenswasserbildungsparameter, damit auf der Oberfläche des Wärmeaustauschers das Kondenswasser gebildet wird.

5. Multisplit-Klimaanlage nach einem der Ansprüche 2 bis 4, **dadurch gekennzeichnet, dass** die Steuerung bei der Durchführung des Vereisungsmodus durch die Steuerung in der Lage ist, die folgenden Schritte auszuführen: Bestimmen, ob eine Luftleitungstemperatur eines Wärmeaustauschers der Inneneinheit während einer zweiten vorgegebenen Zeit stets immer geringer als eine erste vorgegebene Temperatur ist, wenn dies der Fall ist, Beenden des Vereisungsmodus, und andernfalls Durchführen eines nächsten Schrittes, der ein derartiges Steuern eines Motors der Inneneinheit, die den Selbstreinigungsbefehl erhalten hat, dass sich dieser während einer dritten vorgegebenen Zeit mit einer vorgegebenen ersten Umdrehungsgeschwindigkeit dreht, damit eine Brise erzeugt wird, ein Erhalten einer Luftleitungstemperatur des Wärmeaustauschers der Inneneinheit während eines späteren Teils der dritten vorgegebenen Zeit, und ein Bestimmen von Größen zwischen der Luftleitungstemperatur, einer zweiten vorgegebenen Temperatur und einer dritten vorgegebenen Temperatur, wobei die zweite vorgegebene Temperatur geringer als die dritte vorgegebene Temperatur ist, umfasst; wenn die Luftleitungstemperatur des Wärmeaustauschers der Inneneinheit geringer als die zweite vorgegebene Temperatur ist, derartiges Steuern des Motors, das sich dieser während einer vierten vorgegebenen Zeit in einem Brisenmodus mit der vorgegebenen ersten Umdrehungsgeschwindigkeit dreht, und wenn die Luftleitungstemperatur des Wärmeaustauschers der Inneneinheit nicht geringer als die dritte vorgegebene Temperatur ist, derartiges Steuern des Motors, dass seine Drehung während der vierten vorgegebenen Zeit angehalten wird; und wenn die Luftleitungstemperatur des Wärmeaustauschers der Inneneinheit zwischen der zweiten vorgegebenen Temperatur und der dritten vorgegebenen Temperatur liegt, derartiges Steuern des Motors, dass seine Drehung während eines früheren Teils der vierten vorgegebenen Zeit angehalten wird, und derartiges Steuern des Motors, dass sich dieser während der restlichen Zeit der vierten vorgegebenen Zeit mit der vorgegebenen ersten Umdrehungsgeschwindigkeit dreht.

6. Multisplit-Klimaanlage nach Anspruch 5, **dadurch gekennzeichnet, dass** die Steuerung bei der Durchführung des Abtaumodus durch die Steuerung in der Lage ist, die folgenden Schritte auszuführen: Bestimmen, ob eine Rücklufttemperatur der Inneneinheit höher als eine vorgegebene Rücklufttemperatur ist, wenn dies der Fall ist, derartiges Steuern des Motors, dass sich dieser mit einer vorgegebenen zweiten Umdrehungsgeschwindigkeit dreht, damit eine mittlere Luftzufuhr erzeugt wird; und wenn dies nicht der Fall ist, Durchführen eines Heizmodus und derartiges Steuern des Motors, dass seine Drehung angehalten wird, damit Wärme zum Schmelzen des Eises erzeugt wird.

7. Multisplit-Klimaanlage nach Anspruch 6, **dadurch gekennzeichnet, dass** die Steuerung bei der Durchführung des Abtaumodus durch die Steuerung zur Ausführung des Folgenden in der Lage ist: bei Durchführung des Abtaumodus mit der mittleren Luftzufuhr fortlaufendes Durchführen des Abtaumodus für eine fünfte vorgegebene Zeit und dann Beenden des Abtaumodus; bei Durchführung des Abtaumodus durch die Inneneinheit mit der Wärme, zunächst Bestimmen, ob eine Temperatur an einem Flüssigkeitsleitungs-Temperatursensor der Inneneinheit, die den Abtaumodus durchführt, während einer sechsten vorgegebenen Zeit höher als eine fünfte vorgegebene Temperatur ist, wenn dies der Fall ist, Beenden des Abtaumodus, und andernfalls Fortsetzen der Durchführung des Abtaumodus mit der Wärme für eine siebente vorgegebene Zeit.

8. Multisplit-Klimaanlage nach Anspruch 1, **dadurch gekennzeichnet, dass** die Steuerung bei der Durchführung des Selbstreinigungsmodus durch die Steuerung in der Lage ist, einen folgenden Schritt auszuführen: derartiges Steuern eines Motors der Inneneinheit, die den Selbstreinigungsbefehl erhalten hat, dass sich dieser mit einer vorgegebenen ersten Umdrehungsgeschwindigkeit dreht, damit während einer vorgegebenen Wartezeit Luft geliefert wird.

9. Steuerungsverfahren für eine Multisplit-Klimaanlage, die auf der Multisplit-Klimaanlage nach einem der Ansprüche 1 bis 8 beruht, **dadurch gekennzeichnet, dass** bei Durchführung eines Selbstreinigungsmodus durch wenigstens eine Inneneinheit unter den mehreren Inneneinheiten detektiert wird, ob ein Betriebskonflikt zwischen irgendeiner anderen Inneneinheit und der wenigstens einen Inneneinheit, die den Selbstreinigungsmodus durchführt, vorliegt, die wenigstens eine Inneneinheit bei Vorliegen eines Betriebskonflikts so arbeitet, dass sie während einer vorgegebenen Wartezeit Luft liefert, um eine Oberfläche wenigstens eines Wärmeaustauschers der wenigstens einen Inneneinheit trocken zu halten, und vorzugsweise einen festgelegten Betriebsmodus der wenigstens einen Inneneinheit durchführt.

## Revendications

1. Climatiseur à divisions multiples, comprenant une pluralité d'unités intérieures avec échangeurs de chaleur, dans lequel
chaque unité intérieure comprend un contrôleur, le contrôleur comprend un processeur et une mémoire, **caractérisé en ce que**
le contrôleur est configuré pour mettre en œuvre les étapes suivantes :
lorsqu'une unité intérieure reçoit une instruction d'auto-nettoyage, détecter si un mode de fonctionnement de toute autre unité intérieure entre en conflit avec un mode de fonctionnement de l'unité intérieure recevant l'instruction d'auto-nettoyage ; et
en cas de conflit de mode, exécuter un mode d'attente d'auto-nettoyage, par l'unité intérieure recevant l'instruction d'auto-nettoyage et poursuivre le fonctionnement selon un mode de fonctionnement défini par toute autre unité intérieure.

2. Climatiseur à divisions multiples selon la revendication 1, **caractérisé en ce que**, lorsque l'unité intérieure reçoit l'instruction d'auto-nettoyage, une alarme est détectée dans le système à divisions multiples ; et si l'alarme se déclenche, l'instruction d'auto-nettoyage n'est pas exécutée.

3. Climatiseur à divisions multiples selon la revendication 2, **caractérisé en ce que** le contrôleur est configuré pour exécuter les étapes suivantes : en l'absence d'alarme ou de conflit de mode, exécuter les modes suivants séquentiellement : un mode condensation d'eau qui permet la formation d'eau condensée sur la surface d'un échangeur de chaleur, un mode givrage qui permet la formation de givre et de glace sur l'échangeur de chaleur et un mode fonte de glace qui permet d'éliminer la poussière à la surface de l'échangeur de chaleur par dégivrage et dégel.

4. Climatiseur à divisions multiples selon la revendication 3, **caractérisé en ce que**, lorsque le contrôleur est en mode condensation d'eau, le contrôleur est capable de mettre en œuvre les étapes suivantes : réglage des paramètres de formation d'eau de condensation, comprenant : le réglage de l'unité intérieure recevant l'instruction d'auto nettoyage en mode réfrigération ; le réglage d'une température comme une température prédéfinie ; le réglage d'un volume d'air qui permet la formation d'un courant d'air lorsqu'un moteur de l'unité intérieure recevant l'instruction d'auto nettoyage tourne à une première vitesse de rotation prédéfinie ; la mise en marche d'une pompe à eau de l'unité intérieure recevant l'instruction d'auto nettoyage et l'arrêt du mode antigel ; et l'attente continue pendant une première durée prédéfinie après le réglage des paramètres de formation d'eau de condensation, afin que l'eau de condensation se forme à la surface de l'échangeur thermique.

5. Climatiseur à divisions multiples selon l'une quelconque des revendications 2 à 4, **caractérisé en ce que**, lorsque le contrôleur exécute un mode givrage, le contrôleur est capable de mettre en œuvre les étapes suivantes : déterminer si une température de conduit d'air d'un échangeur de chaleur de l'unité intérieure est toujours inférieure à une première température prédéfinie pendant une deuxième durée prédéfinie ; si tel est le cas, mettre fin au mode givrage ; sinon, exécuter une étape suivante comprenant de : commander un moteur de l'unité intérieure recevant l'instruction d'auto nettoyage pour qu'il tourne à une première vitesse de rotation prédéfinie pendant une troisième durée prédéfinie afin de créer un courant d'air, obtenir une température de conduit d'air de l'échangeur de chaleur de l'unité intérieure pendant une dernière partie de la troisième durée prédéfinie et déterminer les valeurs entre le température de conduit d'air, une deuxième température prédéfinie et une troisième température prédéfinie, dans lequel la deuxième température prédéfinie est inférieure à la troisième température prédéfinie ; si la température de conduit d'air de l'échangeur de chaleur de l'unité intérieure est inférieure à la deuxième température prédéfinie, commander le moteur pour qu'il tourne en mode courant d'air à la première vitesse de rotation prédéfinie pendant une quatrième durée prédéfinie et si la température de conduit d'air de l'échangeur de chaleur de l'unité intérieure n'est pas inférieure à la troisième température prédéfinie, commander l'arrêt de la rotation du moteur pendant la quatrième durée prédéfinie ; et si la température de conduit d'air de l'échangeur de chaleur de l'unité intérieure est comprise entre la deuxième et la troisième température prédéfinies, commander l'arrêt de la rotation du moteur pendant une partie de la quatrième durée prédéfinie et commander le moteur pour qu'il tourne à la première vitesse de rotation prédéfinie pendant le reste de la quatrième durée prédéfinie.

6. Climatiseur à divisions multiples selon la revendication 5, **caractérisé en ce que**, lorsque le contrôleur est en mode de fonte de glace, le contrôleur est capable de mettre en œuvre les étapes suivantes : déterminer si une température d'air de retour de l'unité intérieure est supérieure à la température d'air de retour prédéfinie ; si tel est le cas, commander le moteur pour qu'il tourne à une deuxième vitesse de rotation prédéfinie afin de former un flux d'air moyen ; et sinon, activer un mode chauffage et commander l'arrêt de la rotation du moteur afin de générer de la chaleur pour faire fondre la glace.

7. Climatiseur à divisions multiples selon la revendication 6, **caractérisé en ce que**, lorsque le contrôleur exécute le mode de fonte de glace, le contrôleur est capable de mettre en œuvre : lorsque l'unité intérieure exécute le mode de fonte de glace avec un flux d'air moyen, exécuter le mode de fonte de glace en continu pendant une cinquième durée prédéfinie, puis arrêter le mode de fonte de glace ; lorsque l'unité intérieure exécute le mode de fonte de glace avec chauffage, déterminer d'abord si une température sur un capteur de température de tuyau de liquide de l'unité intérieure exécutant le mode de fonte de glace pendant une sixième durée prédéfinie est supérieure à la cinquième température prédéfinie ; si tel est le cas, arrêter le mode de fonte de glace ; sinon, poursuivre le mode de fonte de glace avec chauffage pendant une septième durée prédéfinie.

8. Climatiseur à divisions multiples selon la revendication 1, **caractérisé en ce que**, lorsque le contrôleur exécute le mode d'attente d'auto nettoyage, le contrôleur est capable de mettre en œuvre l'étape suivante : commander le moteur de l'unité intérieure recevant l'instruction d'auto nettoyage pour qu'il tourne à une première vitesse de rotation prédéfinie afin d'alimenter en air pendant une durée prédéfinie.

9. Procédé de commande d'un climatiseur à divisions multiples, basé sur le climatiseur à divisions multiples selon l'une quelconque des revendications 1 à 8, **caractérisé en ce que**, lorsqu'au moins une unité intérieure parmi la pluralité d'unités intérieures exécute un mode d'auto-nettoyage, un conflit de mode de fonctionnement est détecté entre toute autre unité intérieure et au moins une unité intérieure exécutant le mode d'auto-nettoyage, en cas de conflit de mode, la au moins une unité intérieure fournit de l'air pendant un temps d'attente prédéfini afin de maintenir sèche une surface d'au moins un échangeur de chaleur d'au moins une unité intérieure et exécute préférentiellement un mode de fonctionnement prédéfini d'au moins une unité intérieure.
